# EUROPEAN PATENT SPECIFICATION

(11) **EP 3 039 595 B1**
(45) Date of publication and mention of the grant of the patent: **31.03.2021**
(21) Application number: 14840979.0
(22) Date of filing: 13.08.2014
(51) Int. Cl.: G06F 9/44, G05B 17/02, G05B 23/02

(54) **SYSTEM AND METHOD FOR MULTI-DOMAIN STRUCTURAL ANALYSIS ACROSS APPLICATIONS IN INDUSTRIAL CONTROL AND AUTOMATION SYSTEM**
SYSTEM UND VERFAHREN ZUR MULTIDOMÄNENSTRUKTURANALYSE ÜBER ANWENDUNGEN HINWEG IN EINEM INDUSTRIELLEN STEUERUNGS- UND AUTOMATISIERUNGSSYSTEM
SYSTÈME ET PROCÉDÉ POUR UNE ANALYSE STRUCTURALE MULTIDOMAINE À TRAVERS DES APPLICATIONS DANS UN SYSTÈME DE COMMANDE ET D'AUTOMATISATION INDUSTRIEL

(30) Priority: 28.08.2013 US 201314012839
(43) Date of publication of application: 06.07.2016
(73) Proprietor: Honeywell International Inc., Morris Plains, NJ 07950 (US)
(72) Inventor: SUNDERAM, Meenakshi, Morristown, New Jersey 07962-2245 (US)
(74) Representative: Houghton, Mark Phillip
(86) International application number: PCT/US2014/050832
(87) International publication number: WO 2015/031053

(56) References cited:
- US-A- 5 295 222
- US-A1- 2002 077 711
- US-A1- 2003 139 837
- US-A1- 2004 049 509
- US-A1- 2006 242 170
- US-A1- 2010 318 934
- US-A1- 2011 040 399
- US-A1- 2012 303 150

## Description

### TECHNICAL FIELD

This disclosure relates generally to industrial process control and automation systems. More specifically, this disclosure relates to a system and method for multi-domain structural analysis across applications in an industrial control and automation system.

### BACKGROUND

Industrial process control and automation systems are often used to automate large and complex industrial processes. These types of systems routinely include sensors, actuators, and controllers. The controllers typically receive measurements from the sensors and generate control signals for the actuators.

U.S. Patent Publication No. 2002/0077711 discloses a process control system that uses a data collection and distribution system and an asset utilization suite to collect data or information pertaining to the assets of a process plant from various sources or functional areas of the plant including, for example, the process control functional areas, the maintenance functional areas, and the process performance monitoring functional areas. This data and information is manipulated in a coordinated manner by the data collection and distribution system and is redistributed to other applications where it is used to perform overall better or more optimal control, maintenance, and business activities. Information or data may be collected by maintenance functions pertaining to the health, variability, performance, or utilization of a device, loop, unit, area, etc., and this information may then be sent to and displayed to a process operator or maintenance person to inform that person of a current or future problem. A user interface is also provided that enables users to access and manipulate the expert engine to optimize plant operation or cause optimization of plant operation, to get information about the operation of the plant, etc.

Conventional process control and automation systems often execute various applications. Different applications are designed with different levels of knowledge, and each application often provides value as an individual application. For example, a control application can be used to control specific equipment, an alarm management application can be used to monitor and rationalize alarms, and advance process control (APC) can be used to optimize the basic process control function. When multiple applications are used, there is typically little or no cross-leveraging of knowledge contained in those applications.

Conventional process control and automation systems also often include various "human interface" layers that are provided by applications being executed. The human interface layers typically provide graphical displays or other mechanisms allowing interaction with various users. The content presented in a human interface layer by each application is often fixed by the designer of that application.

### SUMMARY

The present invention in its various aspects is as set out in the appended claims.

This disclosure provides a system and method for multi-domain structural analysis across applications in an industrial control and automation system.

In a first embodiment, a method according to claim 1 is provided.

In a second embodiment, an apparatus according to claim 7 is provided.

In a third embodiment, a non-transitory computer readable medium according to claim 11 is provided.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example industrial process control and automation system according to this disclosure;
FIGURE 2 illustrates an example operational overview of a knowledge integration tool in an industrial process control and automation system according to this disclosure;
FIGURE 3 illustrates an example architectural overview of a knowledge integration tool in an industrial process control and automation system according to this disclosure; and
FIGURE 4 illustrates an example method for multi-domain structural analysis across applications in an industrial control and automation system according to this disclosure.

### DETAILED DESCRIPTION

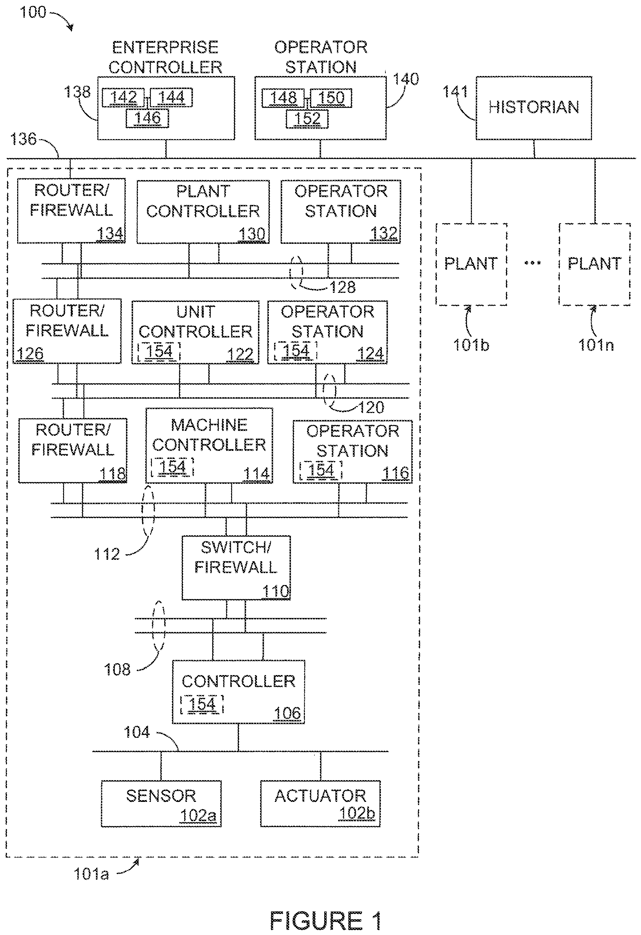

FIGURES 1 through 4, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURE 1 illustrates an example industrial process control and automation system 100 according to this disclosure. As shown in FIGURE 1, the system 100 includes various components that facilitate production or processing of at least one product or other material. For instance, the system 100 is used here to facilitate control over components in one or multiple plants 101a-101n. Each plant 101a-101n represents one or more processing facilities (or one or more portions thereof), such as one or more manufacturing facilities for producing at least one product or other material. In general, each plant 101a-101n may implement one or more processes and can individually or collectively be referred to as a process system. A process system generally represents any system or portion thereof configured to process one or more products or other materials in some manner.

In FIGURE 1, the system 100 is implemented using the Purdue model of process control. In the Purdue model, "Level 0" may include one or more sensors 102a and one or more actuators 102b. The sensors 102a and actuators 102b represent components in a process system that may perform any of a wide variety of functions. For example, the sensors 102a could measure a wide variety of characteristics in the process system, such as temperature, pressure, or flow rate. Also, the actuators 102b could alter a wide variety of characteristics in the process system. The sensors 102a and actuators 102b could represent any other or additional components in any suitable process system. Each of the sensors 102a includes any suitable structure for measuring one or more characteristics in a process system. Each of the actuators 102b includes any suitable structure for operating on or affecting one or more conditions in a process system.

At least one network 104 is coupled to the sensors 102a and actuators 102b. The network 104 facilitates interaction with the sensors 102a and actuators 102b. For example, the network 104 could transport measurement data from the sensors 102a and provide control signals to the actuators 102b. The network 104 could represent any suitable network or combination of networks. As particular examples, the network 104 could represent an Ethernet network, an electrical signal network (such as a HART or FOUNDATION FIELDBUS network), a pneumatic control signal network, or any other or additional type(s) of network(s).

In the Purdue model, "Level 1" may include one or more controllers 106, which are coupled to the network 104. Among other things, each controller 106 may use the measurements from one or more sensors 102a to control the operation of one or more actuators 102b. For example, a controller 106 could receive measurement data from one or more sensors 102a and use the measurement data to generate control signals for one or more actuators 102b. Each controller 106 includes any suitable structure for interacting with one or more sensors 102a and controlling one or more actuators 102b. Each controller 106 could, for example, represent a multivariable controller, such as a Robust Multivariable Predictive Control Technology (RMPCT) controller or other type of controller implementing model predictive control (MPC) or other advanced predictive control (APC). As a particular example, each controller 106 could represent a computing device running a MICROSOFT WINDOWS operating system.

Two networks 108 are coupled to the controllers 106. The networks 108 facilitate interaction with the controllers 106, such as by transporting data to and from the controllers 106. The networks 108 could represent any suitable networks or combination of networks. As particular examples, the networks 108 could represent a pair of Ethernet networks or a redundant pair of Ethernet networks, such as a FAULT TOLERANT ETHERNET (FTE) network from HONEYWELL INTERNATIONAL INC.

At least one switch/firewall 110 couples the networks 108 to two networks 112. The switch/firewall 110 may transport traffic from one network to another. The switch/firewall 110 may also block traffic on one network from reaching another network. The switch/firewall 110 includes any suitable structure for providing communication between networks, such as a HONEYWELL CONTROL FIREWALL (CF9) device. The networks 112 could represent any suitable networks, such as a pair of Ethernet networks or an FTE network.

In the Purdue model, "Level 2" may include one or more machine-level controllers 114 coupled to the networks 112. The machine-level controllers 114 perform various functions to support the operation and control of the controllers 106, sensors 102a, and actuators 102b, which could be associated with a particular piece of industrial equipment (such as a boiler or other machine). For example, the machine-level controllers 114 could log information collected or generated by the controllers 106, such as measurement data from the sensors 102a or control signals for the actuators 102b. The machine-level controllers 114 could also execute applications that control the operation of the controllers 106, thereby controlling the operation of the actuators 102b. In addition, the machine-level controllers 114 could provide secure access to the controllers 106. Each of the machine-level controllers 114 includes any suitable structure for providing access to, control of, or operations related to a machine or other individual piece of equipment. Each of the machine-level controllers 114 could, for example, represent a server computing device running a MICROSOFT WINDOWS operating system. Although not shown, different machine-level controllers 114 could be used to control different pieces of equipment in a process system (where each piece of equipment is associated with one or more controllers 106, sensors 102a, and actuators 102b).

One or more operator stations 116 are coupled to the networks 112. The operator stations 116 represent computing or communication devices providing user access to the machine-level controllers 114, which could then provide user access to the controllers 106 (and possibly the sensors 102a and actuators 102b). As particular examples, the operator stations 116 could allow users to review the operational history of the sensors 102a and actuators 102b using information collected by the controllers 106 and/or the machine-level controllers 114. The operator stations 116 could also allow the users to adjust the operation of the sensors 102a, actuators 102b, controllers 106, or machine-level controllers 114. In addition, the operator stations 116 could receive and display warnings, alerts, or other messages or displays generated by the controllers 106 or the machine-level controllers 114. Each of the operator stations 116 includes any suitable structure for supporting user access and control of one or more components in the system 100. Each of the operator stations 116 could, for example, represent a computing device running a MICROSOFT WINDOWS operating system.

At least one router/firewall 118 couples the networks 112 to two networks 120. The router/firewall 118 includes any suitable structure for providing communication between networks, such as a secure router or combination router/firewall. The networks 120 could represent any suitable networks, such as a pair of Ethernet networks or an FTE network.

In the Purdue model, "Level 3" may include one or more unit-level controllers 122 coupled to the networks 120. Each unit-level controller 122 is typically associated with a unit in a process system, which represents a collection of different machines operating together to implement at least part of a process. The unit-level controllers 122 perform various functions to support the operation and control of components in the lower levels. For example, the unit-level controllers 122 could log information collected or generated by the components in the lower levels, execute applications that control the components in the lower levels, and provide secure access to the components in the lower levels. Each of the unit-level controllers 122 includes any suitable structure for providing access to, control of, or operations related to one or more machines or other pieces of equipment in a process unit. Each of the unit-level controllers 122 could, for example, represent a server computing device running a MICROSOFT WINDOWS operating system. Although not shown, different unit-level controllers 122 could be used to control different units in a process system (where each unit is associated with one or more machine-level controllers 114, controllers 106, sensors 102a, and actuators 102b).

Access to the unit-level controllers 122 may be provided by one or more operator stations 124. Each of the operator stations 124 includes any suitable structure for supporting user access and control of one or more components in the system 100. Each of the operator stations 124 could, for example, represent a computing device running a MICROSOFT WINDOWS operating system.

At least one router/firewall 126 couples the networks 120 to two networks 128. The router/firewall 126 includes any suitable structure for providing communication between networks, such as a secure router or combination router/firewall. The networks 128 could represent any suitable networks, such as a pair of Ethernet networks or an FTE network.

In the Purdue model, "Level 4" may include one or more plant-level controllers 130 coupled to the networks 128. Each plant-level controller 130 is typically associated with one of the plants 101a-101n, which may include one or more process units that implement the same, similar, or different processes. The plant-level controllers 130 perform various functions to support the operation and control of components in the lower levels. As particular examples, the plant-level controller 130 could execute one or more manufacturing execution system (MES) applications, scheduling applications, or other or additional plant or process control applications. Each of the plant-level controllers 130 includes any suitable structure for providing access to, control of, or operations related to one or more process units in a process plant. Each of the plant-level controllers 130 could, for example, represent a server computing device running a MICROSOFT WINDOWS operating system.

Access to the plant-level controllers 130 may be provided by one or more operator stations 132. Each of the operator stations 132 includes any suitable structure for supporting user access and control of one or more components in the system 100. Each of the operator stations 132 could, for example, represent a computing device running a MICROSOFT WINDOWS operating system.

At least one router/firewall 134 couples the networks 128 to one or more networks 136. The router/firewall 134 includes any suitable structure for providing communication between networks, such as a secure router or combination router/firewall. The network 136 could represent any suitable network, such as an enterprise-wide Ethernet or other network or all or a portion of a larger network (such as the Internet).

In the Purdue model, "Level 5" may include one or more enterprise-level controllers 138 coupled to the network 136. Each enterprise-level controller 138 is typically able to perform planning operations for multiple plants 101a-101n and to control various aspects of the plants 101a-101n. The enterprise-level controllers 138 can also perform various functions to support the operation and control of components in the plants 101a-101n. As particular examples, the enterprise-level controller 138 could execute one or more order processing applications, enterprise resource planning (ERP) applications, advanced planning and scheduling (APS) applications, or any other or additional enterprise control applications. Each of the enterprise-level controllers 138 includes any suitable structure for providing access to, control of, or operations related to the control of one or more plants. Each of the enterprise-level controllers 138 could, for example, represent a server computing device running a MICROSOFT WINDOWS operating system. In this document, the term "enterprise" refers to an organization having one or more plants or other processing facilities to be managed. Note that if a single plant 101a is to be managed, the functionality of the enterprise-level controller 138 could be incorporated into the plant-level controller 130.

Access to the enterprise-level controllers 138 may be provided by one or more operator stations 140. Each of the operator stations 140 includes any suitable structure for supporting user access and control of one or more components in the system 100. Each of the operator stations 140 could, for example, represent a computing device running a MICROSOFT WINDOWS operating system.

A historian 141 is also coupled to the network 136 in this example. The historian 141 could represent a component that stores various information about the system 100. The historian 141 could, for example, store information used during production scheduling and optimization. The historian 141 represents any suitable structure for storing and facilitating retrieval of information. Although shown as a single centralized component coupled to the network 136, the historian 141 could be located elsewhere in the system 100, or multiple historians could be distributed in different locations in the system 100.

In particular embodiments, the various controllers and operator stations in FIGURE 1 may represent computing devices. For example, each of the controllers could include one or more processing devices 142 and one or more memories 144 for storing instructions and data used, generated, or collected by the processing device(s) 142. Each of the controllers could also include at least one network interface 146, such as one or more Ethernet interfaces. Also, each of the operator stations could include one or more processing devices 148 and one or more memories 150 for storing instructions and data used, generated, or collected by the processing device(s) 148. Each of the operator stations could also include at least one network interface 152, such as one or more Ethernet interfaces.

As described above, conventional industrial process control and automation systems can execute various applications. Those applications are designed with different levels of knowledge, and there is typically little or no cross-leveraging of knowledge contained in those applications. Moreover, conventional human interface layers provided by the applications often provide fixed content. This can create various problems in an industrial facility. For example, experienced personnel often acquire the knowledge needed to efficiently operate, maintain, and manage an industrial facility over many years. Experienced personnel typically learn about implicit relationships between various entities in the facility during that time. With an aging workforce and fast-paced demands of next-generation industrial resources, it is becoming more and more difficult for less-experienced personnel to efficiently operate, maintain, and manage an industrial facility.

In accordance with this disclosure, at least one component of the system 100 implements or otherwise provides a knowledge integration tool 154. The knowledge integration tool 154 helps to integrate the knowledge associated with multiple applications to link various sub-domain problems in one or more industrial facilities. The applications here may represent applications executed on the same or disparate platforms or systems in one or more geographical locations.

"Sub-domain problems" represent the problems being solved using the various applications. Example sub-domain problems can include the definition of control strategies, the configuration of safety protection logic, and the configuration of advanced process control (APC) and soft sensor applications. Other example sub-domain problems can include the configuration of simulation models, the configuration of operation procedure tracking functions, and the configuration of asset and process management functions. Still other example sub-domain problems can include the configuration of alarm management functions and business workflow management. Each one of these sub-domain problems can have one or more associated applications, and each application typically is encoded or otherwise associated with the knowledge needed to solve the corresponding sub-domain problem(s) .

The knowledge integration tool 154 helps to integrate knowledge across multiple applications. This integrated knowledge could then be used in any suitable manner. For example, the knowledge integration tool 154 can use this information to discover implicit relationships between sub-domain problems. As a particular example, by integrating knowledge from multiple applications, the knowledge integration tool 154 could identify that two distinct control loops in an industrial facility are linked by a flow sheet model in a process simulator, an APC model, a fault or calculation model in an asset management application, or a key performance indicator (KPI) model. That relationship may not be readily known to inexperienced personnel (or even experienced personnel). Another example use of this integrated knowledge can include the generation of "smart" visualization controls embedded in one or more human interface layers.

Various benefits can be obtained through use of the knowledge integration tool 154, although the benefits can vary depending on the implementation and use. For example, an instrument engineer with less knowledge of an industrial facility may use the knowledge integration tool 154 to understand the interlinking of different equipment and the direction of the linking between the equipment in the facility. As another example, a performance decrease with an APC model could be linked by the knowledge integration tool 154 to the failure of a valve identified by an asset management application's fault model. The knowledge integration tool 154 could further be used to generate an alarm summary for a distributed control system (DCS).

Additional details regarding the knowledge integration tool 154 are provided below. The knowledge integration tool 154 includes any suitable structure supporting the integration of knowledge across multiple applications, possibly in multiple domains. The knowledge integration tool 154 could, for example, represent a computing device having at least one processor, at least one memory, and at least one network interface (note that the processor, memory, and network interface could be the same components in an operator station or controller or different components). The knowledge integration tool 154 could also represent a stand-alone component or a component integrated into another component, such as into a computer.

Although FIGURE 1 illustrates one example of an industrial process control and automation system 100, various changes may be made to FIGURE 1. For example, a control system could include any number of sensors, actuators, controllers, servers, operator stations, networks, and knowledge integration tools. Also, the makeup and arrangement of the system 100 in FIGURE 1 is for illustration only. Components could be added, omitted, combined, or placed in any other suitable configuration according to particular needs. Further, particular functions have been described as being performed by particular components of the system 100. This is for illustration only. In general, process control systems are highly configurable and can be configured in any suitable manner according to particular needs. In addition, FIGURE 1 illustrates an example environment in which a knowledge integration tool can be used. This functionality can be used in any other suitable device or system.

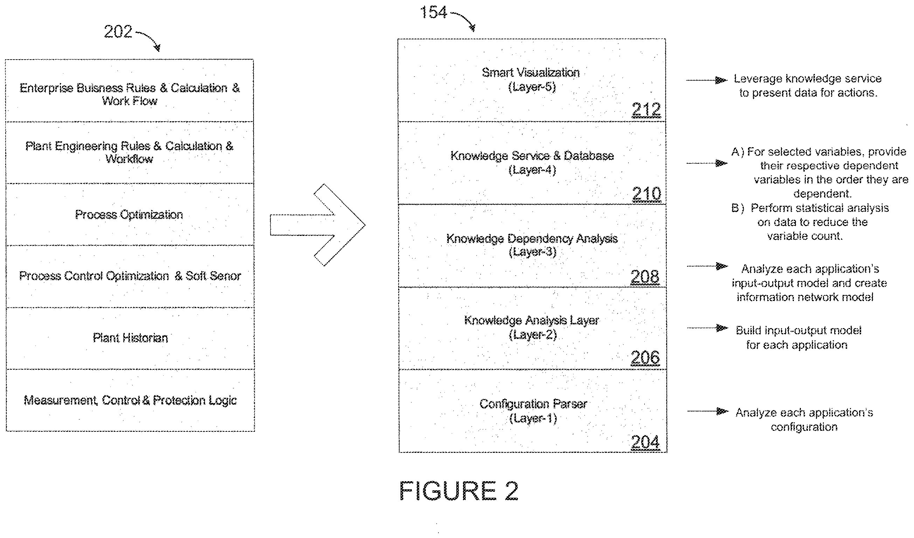

FIGURE 2 illustrates an example operational overview of a knowledge integration tool 154 in an industrial process control and automation system according to this disclosure. As shown in FIGURE 2, the knowledge integration tool 154 interacts with various applications 202 associated with an industrial process control and automation system. The applications 202 here support measurement, control, and protection logic and plant historian functions. The applications 202 also support process control optimization, soft sensor, and process optimization functions. In addition, the applications 202 support plant engineering and enterprise business rules, calculations, and workflows. These applications 202 are for illustration only, and any other or additional applications 202 could be used to solve any other or additional sub-domain problems.

The knowledge integration tool 154 generally operates to parse the configurations of the various applications 202 in order to build input-output models associated with the applications 202. The knowledge integration tool 154 then performs dependency analysis using the input-output models and builds an information network model. The information network model stores the knowledge integrated from the various applications 202 and can represent any suitable type of model, such as a tree or graph. The information network model can then be used to support various functions.

As shown in FIGURE 2, the knowledge integration tool 154 includes a configuration parser layer 204. The configuration parser layer 204 receives and analyzes configuration data associated with each application 202. The configuration parser layer 204 does this to identify the various input variables and output variables associated with each application 202. Specific examples of the information that can be identified include controller inputs and outputs, alerts and their inputs, logic inputs and outputs, and rule inputs and outputs. In particular embodiments, the configuration parser layer 204 is able to parse HONEYWELL EXPERION control databases, EXPERION SCADA databases, TPS control databases, SAFETY BUILDER databases, UNIFORMANCE databases, UNISIM design model files, INTUITION calculation server files, and PROFIT SUITE model files.

Each application's configuration can include logic or other knowledge that takes boundary inputs (such as field data) and generates outputs. Within each configuration, there could be a single level of data connections or a nested level of data connections before the associated application 202 can generate one or more outputs. The applications 202 analyzed by the configuration parser layer 204 could include applications in a single industrial facility or across multiple facilities. The applications 202 could also be supported by one or multiple servers or other computing devices or systems in one or multiple geographic locations.

The information collected by the configuration parser layer 204 is passed to a knowledge analysis layer 206, which uses the information to build input-output models for the applications 202. An input-output model typically includes a simple representation of the inputs versus the outputs of an application 202. Each input-output model could identify the inputs and outputs of the lowest level functional blocks (such as blocks in a HONEYWELL EXPERION or SAFETY MANAGER application) up to system-level or enterprise-level rules or calculations (such as in HONEYWELL INTUITION applications).

In economics, an input-output model can represent a quantitative economic representation of the interdependencies between different branches of a national economy or different regional economies. Economic models are typically linear and can be easily constructed based on data samples. In process industries, the same approach does not work since linear input-output data-based models can be applied only to smaller sections of an industrial process (such as APC or early event detection) and are not guaranteed to be valid across various modes or raw material specifications of an industrial facility. As a result, the knowledge integration tool 154 can perform structural analysis of various application configurations to build the input-output models in order to exploit multiple-level dependencies between the applications 202.

A knowledge dependency analysis layer 208 analyzes the applications' input-output models to build the information network model. As each application 202 has knowledge, the input-output models are used by the knowledge dependency analysis layer 208 to connect the knowledge content within the applications 202. This could include linking common data variables used in different input-output models. As a particular example, dependencies between two control loops could be identified from simulation or APC models or based on the decision model of an INTUITION application (such as a monitoring or asset management application). Historian references used in advanced applications (such as KPI applications) could also establish relationships between calculated key performance indicators and control points.

Dependency analysis of input-output models explores the sequence and direction of dependencies (independent of application) and generates an information network model. The information network model can represent a tree or graph data model containing the overall knowledge of the various applications 202 in terms of variables defined in each application. For example, the information network model can identify the relationships between data elements as well as relationships between data elements and events. The information network model could therefore "unhide" most or all of the implicit connections between applications 202 (depending on the extent of configuration data made available by each application 202).

A knowledge service and database layer 210 supports the storage and use of the information network model. For example, the information network model could be accessible through a well-defined service for integration with a smart visualization layer 212. The service can be provided to standalone applications or integrated into other applications. The knowledge service could provide any suitable functionality involving an information network model. In this example, the knowledge service can use the information network model to identify dependent variables associated with a selected variable in a process system. The knowledge service can also use the information network model to perform statistical analyses to reduce the number of variables being used for some task.

This represents two example uses of the information network model. Another example use involves identifying implicit connections or relations between applications 202 to build smart visualizations in the visualization layer 212. These smart visualizations can be used to support navigation options to allow users to quickly review related groups of data or events and take actions based on that information. As particular examples, the visualization layer 212 could provide smart visualization controls that automatically form data groups based on variables or model properties being reviewed, and the visualization layer 212 could obtain data independent of the specific applications' models.

This approach is based on structural or fundamental relationships within the applications 202 and exploits the implicit relationships with direction. Note that the relationships identified can include top-to-bottom and bottom-to-top relationships within a single application 202, as well as relationships across applications 202. The knowledge collected could be used by vitalization applications to enhance an operator's ability to efficiently operate, maintain, or manage an industrial facility.

Each layer 204-212 of the knowledge integration tool 154 could be implemented using any suitable hardware or combination of hardware and software/firmware instructions. For example, the layers 204-212 in FIGURE 2 could be implemented using software or firmware instructions executed by one or more processing devices, such as the processing device(s) in one or more controllers, servers, or operator stations of FIGURE 1.

Note, however, that various layers of the knowledge integration tool 154 could be implemented in a different manner or excluded from the tool 154 itself. For example, the knowledge integration tool 154 could include extensibility support allowing the tool 154 to plug into one or more third-party application configuration analyzers. As another example, the knowledge integration tool 154 could support the ability to import input-output models, such as from a spreadsheet. Both functions can be used to import data into the knowledge integration tool 154, rather than requiring the knowledge integration tool 154 to identify that data.

The knowledge integration tool 154 can support a common data access service that allows the knowledge integration tool 154 to acquire data from one or more sources without requiring an engineer to configure a mapping for each specific application. Also, the knowledge integration tool 154 could support the ability of one or more users to directly add knowledge content to the data used, generated, or collected by the knowledge integration tool 154. This additional knowledge can be incorporated into the information network model. The additional knowledge can take any suitable form, such as a decision tree or an input-output model.

Although FIGURE 2 illustrates one example of an operational overview of a knowledge integration tool 154 in an industrial process control and automation system, various changes may be made to FIGURE 2. For example, the knowledge integration tool 154 could be used with any other or additional applications 202. Also, as noted above, various functions of the knowledge integration tool 154 could be implemented outside of the knowledge integration tool 154 and the associated data imported into the knowledge integration tool 154.

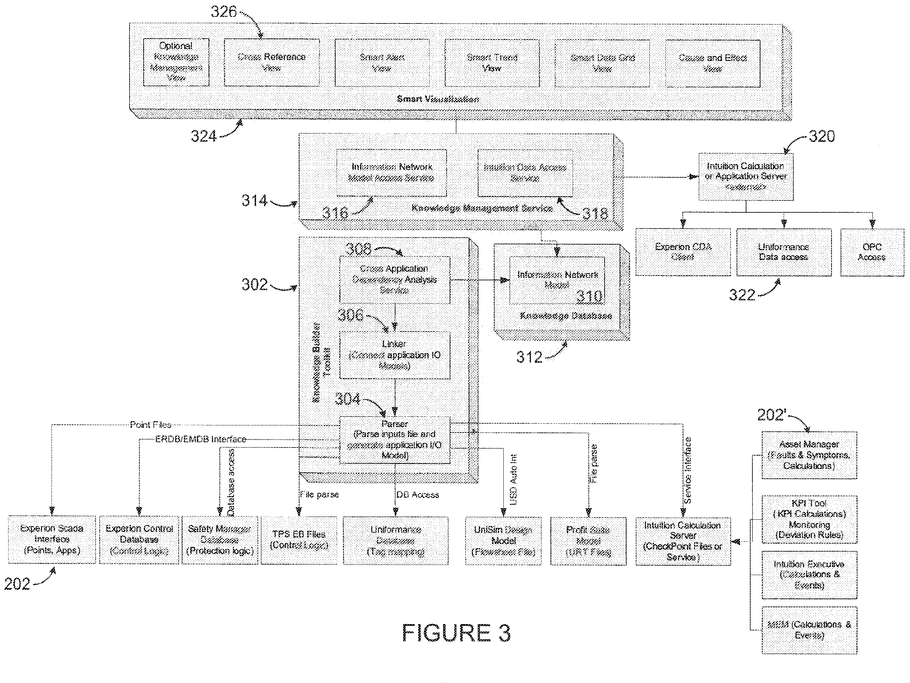

FIGURE 3 illustrates an example architectural overview of a knowledge integration tool 154 in an industrial process control and automation system according to this disclosure. As shown in FIGURE 3, the architectural overview again includes or is associated with various applications 202 associated with different sub-domain problems. In this example, one application 202 receives data from various additional applications 202'. The knowledge integration tool 154 can integrate knowledge associated with the applications 202 as well as with the applications 202' interacting with the applications 202. The configuration data for the applications 202' could be retrieved directly from the applications 202' or indirectly via the applications 202.

A knowledge builder toolkit 302 collects and processes the configuration information associated with the applications 202, 202'. In some embodiments, the toolkit 302 represents a standalone tool that imports configuration data from one or more applications and builds an information network model. However, the toolkit 302 could be implemented in any other suitable manner.

The toolkit 302 here includes a parser 304, which receives and parses the configuration data from the applications 202, 202'. The parser 304 also generates the input-output models for the applications 202, 202'. A linker 306 connects the applications' input-output models and identifies dependencies between the models. A cross-application dependency analysis service 308 uses the dependencies to build an information network model 310. In this way, the components 304-308 of the toolkit 302 implement the layers 204-208 of the knowledge integration tool 154.

The information network model 310 is stored in a database 312. The information network model 310 is also made accessible to a knowledge management service 314. The knowledge management service 314 can use the information network model 310 to provide any suitable functionality. For example, an information network model access service 316 can provide access to the information network model 310. Also, an INTUITION or common data access service 318 can facilitate obtaining data values associated with the information network model 310 for calculation or visualization. The knowledge management service 314 can therefore represent a combination of a knowledge database and a common data access service, which thereby provides access and use of the information network model 310 and its associated data independent of the various applications. In particular embodiments, the knowledge management service 314 can be accessible from different "levels" of a system (such as different levels of the Purdue model), where those levels comply with appropriate security guidelines. In this way, the components 310-318 implement the layer 210 of the knowledge integration tool 154.

A smart visualization layer 324 provides various smart visualizations 326 to users. In this way, the layer 324 implements the layer 212 of the knowledge integration tool 154.

In this example, "Smart Trend View" and "Smart Data Grid View" visualizations 326 are used to present information related to the behavior of variables associated with an industrial process. Typically, trends and data grids are configured manually by users based on their knowledge of a process system and their knowledge of various applications. The "Smart Trend View" visualization 326 can identify a group of variables automatically based on a key variable identified by statistical measure that a user has selected to review. The group of variables can be auto-populated with related variables based on the information network model 310. When there are a large number of variables dependent on the selected variable, the information network model 310 can be used along with statistical analysis to reduce the number of variables and create a trend. A similar process can be used to automatically generate a variable group for the "Smart Data Grid View" visualization 326. A specific example of this functionality could include a heat exchanger's effectiveness that is configured in an asset management application's model. When a user wants to view the heat exchanger's effectiveness, a simple search can be performed to identify and provide the upstream variables that have a higher impact on the heat exchanger's effectiveness. The upstream variables can be associated with an application other than the asset management application.

A "Smart Alert Viewer" visualization 326 is used to identify a sequence of alerts/alarms and the variables that contributed to the alerts/alarms. This is typically difficult to identify in complex interlinked processes. The "Smart Alert Viewer" visualization 326 can also use the information network model 310 to identify the relation between an alert/alarm and other variables. This allows a user to look for the top potential contributors of each alert/alarm.

A "Cross Reference Viewer" visualization 326 provides a static view or mapping of different entities in an overall system. This view may enable a user to quickly understand the dependency or data flow of connections and to check the integrity of the connections.

A "Cause and Effect Viewer" visualization 326 allows a user to view a set of dependent variables associated with a selected variable. In some embodiments, a "basic" view can represent a dynamic display of a selected variable plotted against a set of dependent variables, and an "advanced" view can be used to analyze a specific problem. In the "advanced" view, the information network model 310 (along with a data set from a historian) can be used to identify a narrow set of variables associated with a selected variable. This enables a user to build a dynamic linear model on the fly, and the dynamic model can be perturbed to analyze a reason of a failure.

An optional "Knowledge Management View" visualization 326 allows a user to view and control the content of the information network model 310. For example, this visualization 326 may allow a user to view relationships involving variables associated with the applications. This visualization 326 may also allow a user to add knowledge content to the information network model 310.

These visualizations 326 represent only examples of the types of visualizations that can be supported and used with an information network model 310. Any other or additional visualizations 326 could be used.

Each of the components shown in FIGURE 3 can be implemented using any hardware or combination of hardware and software/firmware instructions. For example, various components in FIGURE 3 could be implemented using software or firmware instructions executed by one or more processing devices, such as the processing device(s) in one or more controllers, servers, or operator stations of FIGURE 1.

Although FIGURE 3 illustrates one example of an architectural overview of a knowledge integration tool 154 in an industrial process control and automation system, various changes may be made to FIGURE 3. For example, the knowledge integration tool 154 could be used with any other or additional applications 202 and 202', services 314, servers 320, clients 322, and smart visualizations. Also, the functional division shown in FIGURE 3 is for illustration only. Various components in FIGURE 3 could be combined, further subdivided, or omitted and additional components could be added according to particular needs. In addition, as noted above, various functions of the knowledge integration tool 154 could be implemented outside of the knowledge integration tool 154 and the associated data imported into the knowledge integration tool 154.

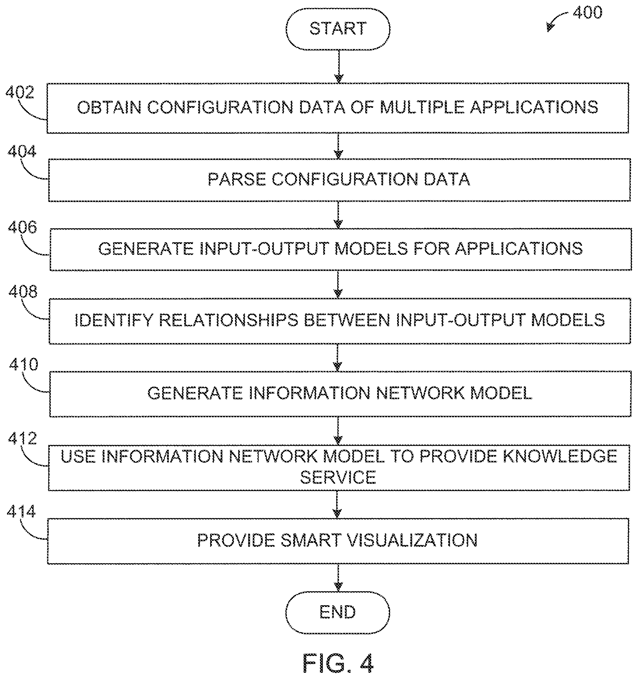

FIGURE 4 illustrates an example method 400 for multi-domain structural analysis across applications in an industrial control and automation system according to this disclosure. As shown in FIGURE 4, configuration data of multiple applications is obtained at step 402. This could include, for example, the knowledge integration tool 154 collecting configuration data from the applications 202, 202'. The configuration data could be stored in any suitable location(s), such as a database or other storage device(s) associated with each application.

The configuration data is parsed at step 404, and input-output models are generated for the applications at step 406. This could include, for example, the knowledge integration tool 154 identifying the input and output variables associated with each application 202, 202'. This could also include the knowledge integration tool 154 generating, for each application, a model representing the input variables versus the output variables of that application. This can be done at all levels of an industrial automation and control system.

Relationships between the input-output models are identified at step 408, and an information network model is generated at step 410. This could include, for example, the knowledge integration tool 154 identifying variables that are common among multiple input-output models. Once again, the dependencies can involve the same application or different applications at the same level or at different levels of an industrial automation and control system. This could also include the knowledge integration tool 154 generating a tree or graph data model that represents the interdependencies between the input-output models.

At this point, the information network model can be used in any suitable manner. In this example, the information network model is used to provide a knowledge service at step 412 and to provide smart visualization at step 414. The knowledge service can use the information network model 310 to perform any desired function, such as to identify related variables associated with models used by different applications. The smart visualization can involve the generation of any suitable display based on information obtained from or determined using the information network model 310. The information network model could be used in any other suitable manner.

Although FIGURE 4 illustrates one example of a method 400 for multi-domain structural analysis across applications in an industrial control and automation system, various changes may be made to FIGURE 4. For example, while shown as a series of steps, various steps in FIGURE 4 could overlap, occur in parallel, or occur multiple times.

Note that the above description has described the use of first models (such as input-output models) to generate a second model (such as an information network model). However, the second model can also be extended further to generate one or more third-level models, one or more fourth level models, and so on. This can be done to associate variables in connected plants in an enterprise network or otherwise associate variables in multiple information network models.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

While this disclosure has described certain embodiments and generally associated methods, alterations and permutations of these embodiments and methods will be apparent to those skilled in the art. Accordingly, the above description of example embodiments does not define or constrain this disclosure.

## Claims

1. A method comprising:
parsing (404) configuration data of multiple applications (202, 202') associated with an industrial process control and automation system (100), and integrating the information associated with the multiple applications to link various sub-domain problems in the industrial process control and automation system, the configuration data identifying input variables and output variables associated with each application;
generating (406) input-output models associated with the applications based on the parsed configuration data, wherein each input-output model maps the input variables and the output variables associated with a corresponding one of the applications;
performing structural analysis of various application configurations to build the input-output models in order to exploit multiple-level dependencies between the applications 202;
analyzing dependency of the input-output model of each application to build an information network model by linking (408) two or more of the input or output variables that are common among multiple ones of the input-output models to thereby identify relationships between the applications, wherein the dependency analysis of input-output models provides the sequence and direction of dependencies to generate the information network model;
generating (410) the information network model based on the linked variables, the information network model identifying the relationships between at least one of data elements, events or information associated to the applications; and
storing the input-output models and the information network model in at least one memory (144, 150).

2. The method of Claim 1, wherein generating the information network model comprises generating a tree or graph model that represents the relationships between the applications.

3. The method of Claim 1, further comprising:
providing (412) access to the information network model using a service.

4. The method of Claim 1, further comprising:
generating (414) a visualization based on information obtained from or determined using the information network model, wherein at least a portion of content in the visualization is dynamically selected using the information network model.

5. The method of Claim 4, wherein the visualization comprises at least one of:
a first view identifying a trend or data grid associated with multiple variables selected using the information network model;
a second view identifying a sequence of alerts or alarms and variables, selected using the information network model, that contributed to the alerts or alarms;
a third view identifying a view or mapping of different entities in the industrial control and automation system based on the information network model; and
a fourth view identifying a set of dependent variables associated with a second selected variable.

6. The method of Claim 1, further comprising:
obtaining the configuration data using a common data access service, the common data access service supporting access to the configuration data without a mapping for each specific application.

7. An apparatus comprising:
at least one memory (144, 150) configured to store input-output models associated with multiple applications (202, 202'), the multiple applications associated with an industrial process control and automation system (100), and integrate the information associated with the multiple applications to link various sub-domain problems in the industrial process control and automation system; and
at least one processing device (142, 148) configured to:
parse configuration data of the multiple applications, the configuration data identifying input variables and output variables associated with each application;
generate the input-output models associated with the applications based on the parsed configuration data, wherein each input-output model maps the input variables and the output variables associated with a corresponding one of the applications;
perform structural analysis of various application configurations to build the input-output models in order to exploit multiple-level dependencies between the applications 202;
analyze dependency of the input-output model of each application to build an information network model by linking two or more of the input or output variables that are common among multiple ones of the input-output models to thereby identify relationships between the applications, wherein the dependency analysis of input-output models provides the sequence and direction of dependencies to generate the information network model;
generate the information network model based on the linked variables, the information network model identifying the relationships between at least one of data elements, events or information associated to the applications; and
store the input-output models and the information network model in the at least one memory.

8. The apparatus of Claim 7, wherein the at least one processing device is configured to generate the information network model by generating a tree or graph model that represents the relationships between the applications.

9. The apparatus of Claim 7, wherein the at least one processing device is further configured to provide access to the information network model using a service.

10. The apparatus of Claim 7, wherein the at least one processing device is further configured to generate a visualization based on information obtained from or determined using the information network model, wherein at least a portion of content in the visualization is dynamically selected using the information network model.

11. A non-transitory computer readable medium embodying a computer program, the computer program comprising computer readable program code which, when executed by a computer, cause the computer to carry out:
parsing (404) configuration data of multiple applications (202, 202') associated with an industrial process control and automation system (100), and integrating the information associated with the multiple applications to link various sub-domain problems in the industrial process control and automation system, the configuration data identifying input variables and output variables associated with each application;
generating (406) input-output models associated with the applications (202, 202') based on the parsed configuration data, wherein each input-output model maps the input variables and the output variables associated with a corresponding one of the applications;
performing structural analysis of various application configurations to build the input-output models in order to exploit multiple-level dependencies between the applications 202;
analyzing dependency of the input-output model of each application to build an information network model by linking (408) two or more of the input or output variables that are common among multiple ones of the input-output models to thereby identify relationships between the applications, wherein the dependency analysis of input-output models provides the sequence and direction of dependencies to generate the information network model;
generating (410) the information network model based on the linked variables, the information network model identifying the relationships between at least one of data elements, events or information associated to the applications; and
storing the input-output models and the information network model in at least one memory (144, 150).

12. The computer readable medium of Claim 11, wherein the computer readable program code for generating the information network model comprises computer readable program code for generating a tree or graph model that represents the relationships between the applications.

## Patentansprüche

1. Verfahren, umfassend:
Parsen (404) von Konfigurationsdaten mehrerer Anwendungen (202, 202'), die einem industriellen Prozesssteuerungs- und Automatisierungssystem (100) zugeordnet sind, und Integrieren der den mehreren Anwendungen zugeordneten Informationen, um verschiedene Teilbereichsprobleme in dem industriellen Prozesssteuerungs- und Automatisierungssystem zu verknüpfen, wobei die Konfigurationsdaten Eingabevariablen und Ausgabevariablen identifizieren, die jeder Anwendung zugeordnet sind;
Erzeugen (406) von Eingabe-Ausgabe-Modellen, die den Anwendungen zugeordnet sind, auf der Grundlage der geparsten Konfigurationsdaten, wobei jedes Eingabe-Ausgabe-Modell die Eingabevariablen und die Ausgabevariablen abbildet, die einer entsprechenden der Anwendungen zugeordnet sind;
Durchführen von Strukturanalysen verschiedener Anwendungskonfigurationen zur Erstellung der Eingabe-Ausgabe-Modelle, um mehrstufige Abhängigkeiten zwischen den Anwendungen 202 auszunutzen;
Analysieren der Abhängigkeit des Eingabe-Ausgabe-Modells jeder Anwendung, um ein Informationsnetzmodell zu erstellen, indem zwei oder mehr der Eingabe- oder Ausgabevariablen, die mehreren der Eingabe-Ausgabe-Modelle gemeinsam sind, verknüpft werden (408), um dadurch Beziehungen zwischen den Anwendungen zu identifizieren, wobei die Abhängigkeitsanalyse von Eingabe-Ausgabe-Modellen für die Erzeugung des Informationsnetzmodells die Abfolge und Richtung der Abhängigkeiten liefert;
Erzeugen (410) des Informationsnetzmodells auf der Grundlage der verknüpften Variablen, wobei das Informationsnetzmodell die Beziehungen zwischen den Anwendungen zugeordneten Datenelementen und/oder Ereignissen und/oder Informationen identifiziert; und
Speichern der Eingabe-Ausgabe-Modelle und des Informationsnetzmodells in mindestens einem Speicher (144, 150).

2. Verfahren nach Anspruch 1, wobei das Erzeugen des Informationsnetzmodells das Erzeugen eines Baum- oder Graphenmodells umfasst, das die Beziehungen zwischen den Anwendungen darstellt.

3. Verfahren nach Anspruch 1, ferner umfassend:
Ermöglichen (412) des Zugriffs auf das Informationsnetzmodell, sodass ein Dienst genutzt werden kann.

4. Verfahren nach Anspruch 1, ferner umfassend:
Erzeugen (414) einer Visualisierung auf der Grundlage von Informationen, die aus dem Informationsnetzmodell erhalten oder unter Verwendung des Informationsnetzmodells bestimmt werden, wobei mindestens ein Teil des Inhalts in der Visualisierung unter Verwendung des Informationsnetzmodells dynamisch ausgewählt wird.

5. Verfahren nach Anspruch 4, wobei die Visualisierung mindestens eine der folgenden Ansichten umfasst:
eine erste Ansicht zur Identifizierung eines Trends oder eines Datenrasters, dem mehrere Variablen zugeordnet sind, die mithilfe des Informationsnetzmodells ausgewählt wurden;
eine zweite Ansicht zur Identifizierung einer Abfolge von Warnungen oder Alarmen und Variablen, die mithilfe des Informationsnetzmodells ausgewählt wurden und zu den Warnungen oder Alarmen beigetragen haben;
eine dritte Ansicht zur Identifizierung einer Abbildung oder Zuordnung verschiedener Einheiten in dem industriellen Steuerungs- und Automatisierungssystem auf der Grundlage des Informationsnetzmodells; und
eine vierte Ansicht zur Identifizierung eines Satzes abhängiger Variablen, die einer zweiten ausgewählten Variablen zugeordnet sind.

6. Verfahren nach Anspruch 1, ferner umfassend:
Abrufen der Konfigurationsdaten mithilfe eines üblichen Datenzugriffsdienstes, wobei der übliche Datenzugriffsdienst den Zugriff auf die Konfigurationsdaten ohne Zuordnung für jede bestimmte Anwendung unterstützt.

7. Einrichtung, umfassend:
mindestens einen Speicher (144, 150), der so konfiguriert ist, dass er Eingabe-Ausgabe-Modelle speichert, die mehreren Anwendungen (202, 202') zugeordnet sind, wobei die mehreren Anwendungen einem industriellen Prozesssteuerungs- und Automatisierungssystem (100) zugeordnet sind, und dass er die den mehreren Anwendungen zugeordneten Informationen integriert, um verschiedene Teilbereichsprobleme in dem industriellen Prozesssteuerungs- und Automatisierungssystem zu verknüpfen; und
mindestens eine Verarbeitungsvorrichtung (142, 148), die dafür konfiguriert ist:
Konfigurationsdaten der mehreren Anwendungen zu parsen, wobei die Konfigurationsdaten Eingabevariablen und Ausgabevariablen identifizieren, die jeder Anwendung zugeordnet sind;
die den Anwendungen zugeordneten Eingabe-Ausgabe-Modelle auf der Grundlage der geparsten Konfigurationsdaten zu erzeugen, wobei jedes Eingabe-Ausgabe-Modell die Eingabevariablen und die Ausgabevariablen abbildet, die einer entsprechenden der Anwendungen zugeordnet sind;
eine Strukturanalyse verschiedener Anwendungskonfigurationen durchzuführen, um die Eingabe-Ausgabe-Modelle zu erstellen, um mehrstufige Abhängigkeiten zwischen den Anwendungen 202 auszunutzen;
die Abhängigkeit des Eingabe-Ausgabe-Modells jeder Anwendung zu analysieren, um ein Informationsnetzmodell zu erstellen, indem zwei oder mehr der Eingabe- oder Ausgabevariablen, die mehreren der Eingabe-Ausgabe-Modelle gemeinsam sind, verknüpft werden, um dadurch Beziehungen zwischen den Anwendungen zu identifizieren, wobei die Abhängigkeitsanalyse der Eingabe-Ausgabe-Modelle für die Erzeugung des Informationsnetzmodells die Abfolge und Richtung der Abhängigkeiten liefert;
das Informationsnetzmodell auf der Grundlage der verknüpften Variablen zu erzeugen, wobei das Informationsnetzmodell die Beziehungen zwischen den Anwendungen zugeordneten Datenelementen und/oder Ereignissen und/oder Informationen identifiziert; und
die Eingabe-Ausgabe-Modelle und das Informationsnetzmodell in dem mindestens einen Speicher zu speichern.

8. Einrichtung nach Anspruch 7, wobei die mindestens eine Verarbeitungsvorrichtung so konfiguriert ist, dass sie das Informationsnetzmodell erzeugt, indem sie ein Baum- oder Graphenmodell erzeugt, das die Beziehungen zwischen den Anwendungen darstellt.

9. Einrichtung nach Anspruch 7, wobei die mindestens eine Verarbeitungsvorrichtung ferner so konfiguriert ist, dass sie den Zugriff auf das Informationsnetzmodell ermöglicht, sodass ein Dienst genutzt werden kann.

10. Einrichtung nach Anspruch 7, wobei die mindestens eine Verarbeitungsvorrichtung ferner so konfiguriert ist, dass sie eine Visualisierung auf der Grundlage von Informationen erzeugt, die aus dem Informationsnetzmodell erhalten oder unter Verwendung des Informationsnetzmodells bestimmt werden, wobei mindestens ein Teil des Inhalts in der Visualisierung unter Verwendung des Informationsnetzmodells dynamisch ausgewählt wird.

11. Nichtflüchtiges computerlesbares Medium, das ein Computerprogramm verkörpert, wobei das Computerprogramm computerlesbaren Programmcode umfasst, der, wenn er von einem Computer ausgeführt wird, den Computer zur Ausführung von Folgendem veranlasst:
Parsen (404) von Konfigurationsdaten mehrerer Anwendungen (202, 202'), die einem industriellen Prozesssteuerungs- und Automatisierungssystem (100) zugeordnet sind, und Integrieren der den mehreren Anwendungen zugeordneten Informationen, um verschiedene Teilbereichsprobleme in dem industriellen Prozesssteuerungs- und Automatisierungssystem zu verknüpfen, wobei die Konfigurationsdaten Eingabevariablen und Ausgabevariablen identifizieren, die jeder Anwendung zugeordnet sind;
Erzeugen (406) von Eingabe-Ausgabe-Modellen, die den Anwendungen (202, 202') zugeordnet sind, auf der Grundlage der geparsten Konfigurationsdaten, wobei jedes Eingabe-Ausgabe-Modell die Eingabevariablen und die Ausgabevariablen abbildet, die einer entsprechenden der Anwendungen zugeordnet sind;
Durchführen von Strukturanalysen verschiedener Anwendungskonfigurationen zur Erstellung der Eingabe-Ausgabe-Modelle, um mehrstufige Abhängigkeiten zwischen den Anwendungen 202 auszunutzen;
Analysieren der Abhängigkeit des Eingabe-Ausgabe-Modells jeder Anwendung, um ein Informationsnetzmodell zu erstellen, indem zwei oder mehr der Eingabe- oder Ausgabevariablen, die mehreren der Eingabe-Ausgabe-Modelle gemeinsam sind, verknüpft werden (408), um dadurch Beziehungen zwischen den Anwendungen zu identifizieren, wobei die Abhängigkeitsanalyse von Eingabe-Ausgabe-Modellen für die Erzeugung des Informationsnetzmodells die Abfolge und Richtung der Abhängigkeiten liefert;
Erzeugen (410) des Informationsnetzmodells auf der Grundlage der verknüpften Variablen, wobei das Informationsnetzmodell die Beziehungen zwischen den Anwendungen zugeordneten Datenelementen und/oder Ereignissen und/oder Informationen identifiziert; und
Speichern der Eingabe-Ausgabe-Modelle und des Informationsnetzmodells in mindestens einem Speicher (144, 150).

12. Computerlesbares Medium nach Anspruch 11, wobei der computerlesbare Programmcode zum Erzeugen des Informationsnetzmodells computerlesbaren Programmcode zum Erzeugen eines Baum- oder Graphenmodells umfasst, das die Beziehungen zwischen den Anwendungen darstellt.

## Revendications

1. Procédé comprenant :
l'analyse (404) de données de configuration de multiples applications (202, 202') associées à un système de commande et d'automatisation de processus industriel (100) et l'intégration des informations associées aux multiples applications pour relier divers problèmes de sous-domaine dans le système de commande et d'automatisation de processus industriel, les données de configuration identifiant des variables d'entrée et des variables de sortie associées à chaque application ;
la production (406) des modèles d'entrée-sortie associés aux applications en fonction des données de configuration analysées, chaque modèle d'entrée-sortie mappant les variables d'entrée et les variables de sortie associées à l'une des applications correspondantes ;
la réalisation d'une analyse structurale de diverses configurations d'application pour construire les modèles d'entrée-sortie afin d'exploiter des dépendances à plusieurs niveaux entre les applications 202 ;
l'analyse de la dépendance du modèle d'entrée-sortie de chaque application pour construire un modèle de réseau d'informations par liaison (408) d'au moins deux des variables d'entrée ou de sortie communes à plusieurs des modèles d'entrée-sortie pour identifier ainsi les relations entre les applications, l'analyse de dépendance des modèles d'entrée-sortie fournissant la séquence et la direction des dépendances pour générer le modèle de réseau d'informations ;
la production (410) du modèle de réseau d'informations en fonction des variables liées, le modèle de réseau d'informations identifiant les relations entre au moins l'un d'éléments de données, d'événements ou d'informations associés aux applications ; et
la mémorisation des modèles d'entrée-sortie et du modèle de réseau d'informations dans au moins une mémoire (144, 150).

2. Procédé selon la revendication 1, dans lequel la production du modèle de réseau d'informations comprend la production d'un modèle d'arbre ou de graphique qui représente les relations entre les applications.

3. Procédé selon la revendication 1, comprenant en outre :
la fourniture (412) d'un accès au modèle de réseau d'informations à l'aide d'un service.

4. Procédé selon la revendication 1, comprenant en outre :
la production (414) d'une visualisation basée sur des informations obtenues à partir du modèle de réseau d'informations ou déterminées à l'aide de ce dernier, au moins une partie du contenu de la visualisation étant sélectionnée dynamiquement à l'aide du modèle de réseau d'informations.

5. Procédé selon la revendication 4, dans lequel la visualisation comprend au moins l'une de :
une première vue identifiant une tendance ou une grille de données associée à de multiples variables, sélectionnées à l'aide du modèle de réseau d'informations ;
une deuxième vue identifiant une séquence d'alertes ou d'alarmes et de variables, sélectionnées à l'aide du modèle de réseau d'informations, qui ont contribué aux alertes ou aux alarmes ;
une troisième vue identifiant une vue ou une cartographie de différentes entités dans le système de commande et d'automatisation industriel, en fonction du modèle de réseau d'informations ; et
une quatrième vue, identifiant un ensemble de variables dépendantes associées à une seconde variable sélectionnée.

6. Procédé selon la revendication 1, comprenant en outre :
l'obtention des données de configuration à l'aide d'un service d'accès aux données commun, le service d'accès aux données commun prenant en charge l'accès aux données de configuration sans mappage pour chaque application spécifique.

7. Appareil comprenant :
au moins une mémoire (144, 150), configurée pour stocker des modèles d'entrée-sortie associés à de multiples applications (202, 202'), les multiples applications étant associées à un système de commande et d'automatisation de processus industriel (100), et pour intégrer les informations associées aux multiples applications pour relier divers problèmes de sous-domaines dans le système de commande et d'automatisation de processus industriel ; et
au moins un dispositif de traitement (142, 148), configuré :
pour analyser les données de configuration des multiples applications, les données de configuration identifiant les variables d'entrée et les variables de sortie associées à chaque application ;
pour produire les modèles d'entrée-sortie associés aux applications en fonction des données de configuration analysées, chaque modèle d'entrée-sortie mappant les variables d'entrée et les variables de sortie associées à l'une des applications correspondantes ;
pour réaliser une analyse structurale de diverses configurations d'applications pour construire les modèles d'entrée-sortie, afin d'exploiter les dépendances à plusieurs niveaux entre les applications 202 ;
pour analyser la dépendance du modèle d'entrée-sortie de chaque application pour construire un modèle de réseau d'informations par liaison d'au moins deux des variables d'entrée ou de sortie communes à plusieurs des modèles d'entrée-sortie pour identifier ainsi les relations entre les applications, l'analyse des dépendances des modèles d'entrée-sortie fournissant la séquence et la direction des dépendances pour générer le modèle de réseau d'informations ;
pour produire le modèle de réseau d'informations en fonction des variables liées, le modèle de réseau d'informations identifiant les relations entre au moins l'un d'éléments de données, d'événements ou d'informations associés aux applications ; et
pour stocker les modèles d'entrée-sortie et le modèle de réseau d'informations dans l'au moins une mémoire.

8. Appareil selon la revendication 7, dans lequel l'au moins un dispositif de traitement est configuré pour générer le modèle de réseau d'informations en générant un modèle d'arbre ou de graphique qui représente les relations entre les applications.

9. Appareil selon la revendication 7, dans lequel l'au moins un dispositif de traitement est en outre configuré pour fournir un accès au modèle de réseau d'informations à l'aide d'un service.

10. Appareil selon la revendication 7, dans lequel l'au moins un dispositif de traitement est en outre configuré pour générer une visualisation basée sur des informations obtenues à partir du modèle de réseau d'informations ou déterminées à l'aide de ce dernier, au moins une partie du contenu de la visualisation étant sélectionnée dynamiquement à l'aide du modèle de réseau d'informations.

11. Support non transitoire lisible par ordinateur intégrant un programme informatique, le programme informatique comprenant un code de programme lisible par ordinateur qui, lorsqu'il est exécuté par un ordinateur, amène ce dernier à effectuer :
l'analyse (404) de données de configuration de multiples applications (202, 202') associées à un système de commande et d'automatisation de processus industriel (100) et l'intégration des informations associées aux multiples applications pour relier divers problèmes de sous-domaine dans le système de commande et d'automatisation de processus industriel, les données de configuration identifiant des variables d'entrée et des variables de sortie associées à chaque application ;
la production (406) de modèles d'entrée-sortie associés aux applications (202, 202') en fonction des données de configuration analysées, chaque modèle d'entrée-sortie mappant les variables d'entrée et les variables de sortie associées à l'une des applications correspondante ;
la réalisation d'une analyse structurale de diverses configurations d'application pour construire les modèles d'entrée-sortie afin d'exploiter des dépendances à plusieurs niveaux entre les applications 202 ;
l'analyse de la dépendance du modèle d'entrée-sortie de chaque application pour construire un modèle de réseau d'informations par liaison (408) d'au moins deux des variables d'entrée ou de sortie communes à plusieurs des modèles d'entrée-sortie pour identifier ainsi les relations entre les applications, l'analyse de dépendance des modèles d'entrée-sortie fournissant la séquence et la direction des dépendances pour générer le modèle de réseau d'informations ;
la production (410) du modèle de réseau d'informations en fonction des variables liées, le modèle de réseau d'informations identifiant les relations entre au moins l'un d'éléments de données, d'événements ou d'informations associés aux applications ; et
la mémorisation des modèles d'entrée-sortie et du modèle de réseau d'informations dans au moins une mémoire (144, 150).

12. Support lisible par ordinateur selon la revendication 11, dans lequel le code de programme lisible par ordinateur permettant de générer le modèle de réseau d'informations comprend un code de programme lisible par ordinateur permettant de générer un modèle d'arbre ou de graphique qui représente les relations entre les applications.
